# EUROPEAN PATENT APPLICATION

(11) **EP 4 398 371 A1**
(43) Date of publication of application: **10.07.2024**
(21) Application number: 23807861.2
(22) Date of filing: 16.05.2023
(51) Int. Cl.: H01M 10/0585, H01M 10/0562, H01M 50/536, H01M 10/052, H01M 4/38, H01M 4/40

(54) **ALL-SOLID-STATE BATTERY AND MANUFACTURING METHOD THEREFOR**

(30) Priority: 16.05.2022 KR 20220059563; 15.05.2023 KR 20230062454
(71) Applicant: LG Energy Solution, Ltd., Seoul 07335 (KR)
(72) Inventor: YOM, Jeeho, Daejeon 34122 (KR)
(74) Representative: Goddar, Heinz J.
(86) International application number: PCT/KR2023/006572
(87) International publication number: WO 2023/224342

(57) **Abstract**

The present invention relates to a method of manufacturing an all-solid-state battery which has a simple manufacturing process, can stack more electrodes in a desired size, and also facilitates alignment between electrodes, and an all-solid-state battery manufactured thereby.

## Description

### [Technical Field]

The present application claims the benefits of priorities based on Korean Patent Application No. 10-2022-0059563 filed on May 16, 2022 and Korean Patent Application No. 10-2023-0062454 filed on May 15, 2023, all the contents of which are incorporated herein by reference.

The present invention relates to an all-solid-state battery and a manufacturing method thereof.

### [Background Art]

A secondary battery refers to a device that converts external electrical energy into chemical energy, stores it, and generates electricity when needed. A name called a rechargeable battery is also used, which means that it can be charged many times. Commonly used secondary batteries include lead acid batteries, nickel cadmium batteries (NiCd), nickel hydrogen batteries (NiMH), and lithium secondary batteries. Secondary batteries provide both economic and environmental advantages compared to disposable primary batteries.

On the other hand, as wireless communication technology gradually develops, lightening, thinning, and miniaturization of portable devices or automobile accessories are required, while demand for secondary batteries used as energy sources for these devices is increasing. In particular, as hybrid vehicles and electric vehicles are put into practical use in terms of preventing environmental pollution, research to reduce manufacturing cost and weight by using secondary batteries as these next-generation automotive batteries and to extend lifetime is emerging. Among various secondary batteries, recently, lithium secondary batteries, which are lightweight, exhibit high energy density and operating potential, and have long cycle life, have recently been in the limelight.

In general, a lithium secondary battery is manufactured by mounting an electrode laminate composed of a negative electrode, a positive electrode, and a separator into a cylindrical or prismatic metal can or a pouch-type case of an aluminum laminate sheet, and injecting electrolyte into the electrode laminate.

As a conventional electrolyte for the lithium secondary battery, an electrolyte in a liquid state in which lithium salt is dissolved in a non-aqueous organic solvent has been mainly used. However, the electrolyte in this liquid state is highly likely to degrade the electrode material and volatilize the organic solvent, combustion or explosion occurs due to the temperature rise of the surrounding temperature and the battery itself, and there is a risk of leakage, and thus it is difficult to implement various types of lithium secondary batteries with high safety.

Meanwhile, in the case of an all-solid-state battery using a solid electrolyte, it has the advantage that the electrode laminate can be manufactured in a safe and simple form because organic solvents are excluded.

The all-solid-state batteries can be divided into an oxide-based, polymer-based, and sulfide-based battery according to the raw material of the solid electrolyte. The sulfide-based all-solid-state battery is attracting attention because its lithium-ion conductivity is superior to that of other types of batteries. However, despite the excellent characteristics, the sulfide-based all-solid-state battery has higher ionic conductivity and higher electric resistance between positive and negative electrodes than liquid batteries, so it has the disadvantage of shorter lifetime and lower output compared to conventional liquid electrolyte batteries.

In order to improve the lifetime and output of the unit cell, it is possible to consider different types of positive electrode or negative electrode of solid electrolytes, different types of solid electrolytes, or different assembly methods.

In the case of a sulfide-based all-solid-state battery, when an electrode and a solid electrolyte are manufactured by pressurizing in a roll-to-roll method like a conventional lithium-ion battery (LIB), there is a problem that the inside of the battery becomes porous and interface contact becomes difficult. Accordingly, it is manufactured in a three-dimensional pressurization method through hydrostatic pressure method. In the case of pressurization in this hydrostatic pressure method, the size of the cell that can be pressurized is limited depending on the chamber size of isostatic pressurization equipment such as CIP and WIP, which may limit the scale-up of production of all-solid-state batteries.

For this reason, when manufacturing a lithium metal all-solid-state battery in a laminated structure, there is no way to pressurize the negative electrode/positive electrode and the electrolyte layer at once, and thus there may be a problem that the process steps become complicated and it is difficult to align the stacked electrodes.

Therefore, there is a need for research on a manufacturing method capable of solving the above problems.

(Patent Document 1) Korean Laid-open Patent Publication No. 2021-0007149

### [Disclosure]

### [Technical Problem]

It is an object of the present invention to provide a method for manufacturing an all-solid-state battery in which more electrodes can be stacked in a desired size and alignment between the respective electrodes is facilitated, wherein the manufacturing method is simple.

### [Technical Solution]

In order to achieve the above object, the present invention provides a method for manufacturing an all-solid-state battery, comprising the steps of
(1) preparing a first electrode bending substrate comprising a plurality of first electrodes spaced apart from each other in the width direction on a current collector, wherein at one end of the current collector, a single-sided electrode applied with a first electrode active material is coated on only one side of the current collector, and the electrodes except for the single-sided electrode are double-sided electrodes in which an electrode active material having the same polarity is applied to both sides of the current collector;
(2) preparing a second electrode bending substrate comprising a plurality of second electrodes spaced apart from each other in the width direction on a current collector, wherein at one end of the current collector, a single-sided electrode applied with a second electrode active material is formed on only one side of the current collector, and the electrodes except for the single-sided electrode are double-sided electrodes in which an electrode active material having the same polarity is applied to both sides of the current collector;
(3) manufacturing an electrode laminate by overlapping the double-sided electrode at one end of the second electrode bending substrate on the single-sided electrode at one end of the first electrode bending substrate, and then alternately folding the first electrode bending substrate and the second electrode bending substrate so that the first electrode and the second electrode are alternately stacked; and
(4) pressing the outermost side of the electrode laminate at a high temperature;
wherein a solid electrolyte layer covering the entire electrode is formed on at least one of the first electrode bending substrate and the second electrode bending substrate, preventing the first electrode and the second electrode from contacting each other.

In one embodiment of the present invention, in the case of the first electrode bending substrate, the separation distance between the single-sided electrode and the double-sided electrode adjacent to it is the longest, and the separation distance between adjacent double-sided electrodes gradually decreases, but the separation distances adjacent to each other may be the same, and in the case of the second electrode bending substrate, the separation distance between the single-sided electrode and the double-sided electrode adjacent to it is the shortest, and the separation distance between the adjacent double-sided electrodes gradually longer, but the separation distances adjacent to each other may be the same.

In one embodiment of the present invention, the method may further comprise bonding lead tabs to both outermost sides.

In one embodiment of the present invention, step (4) may comprise pressurizing for 10 to 60 minutes at a pressure of 300 to 500 MPa at 60 to 100 °C.

In one embodiment of the present invention, if the first electrode is a negative electrode, the second electrode may be a positive electrode, and if the first electrode is a positive electrode, the second electrode may be a negative electrode.

In one embodiment of the present invention, the uppermost and lowermost electrodes of the electrode laminate may be single-sided electrodes in which an electrode active material is applied only to one side of the current collector.

In one embodiment of the present invention, the uppermost and lowermost single-sided electrodes may have different polarities.

In one embodiment of the present invention, the electrodes other than the single-sided electrodes may be double-sided electrodes in which an electrode active material having the same polarity is applied to both sides of a current collector.

In one embodiment of the present invention, the solid electrolyte layer may comprise a sulfide-based solid electrolyte.

In one embodiment of the present invention, the solid electrolyte layer may further include a binder and a solvent.

In one embodiment of the present invention, if the first electrode or the second electrode is a negative electrode, the negative electrode active material may be lithium metal or a lithium alloy.

In addition, the present invention provides an all-solid-state battery, comprising an electrode laminate in which first electrodes and second electrodes are alternately stacked by folding the first electrode bending substrate comprising a plurality of first electrodes spaced apart from each other in the width direction on the current collector and the second electrode bending substrate comprising a plurality of second electrodes spaced apart from each other in the width direction on the current collector alternately with each other,
wherein in the first electrode bending substrate, a single-sided electrode in which a first electrode active material is applied only to one side of the current collector is formed at one end of the current collector, and the electrodes other than the single-sided electrodes are double-sided electrodes in which an electrode active material having the same polarity is applied to both sides of a current collector,
wherein in the second electrode bending substrate, a single-sided electrode in which a second electrode active material is applied only to one side of the current collector is formed at one end of the current collector, and the electrodes other than the single-sided electrodes are double-sided electrodes in which an electrode active material having the same polarity is applied to both sides of a current collector, and
wherein a solid electrolyte layer covering the entire electrode is formed on at least one of the first electrode bending substrate and the second electrode bending substrate, preventing the first electrode and the second electrode from contacting each other.

### [Advantageous Effects]

The manufacturing method of the all-solid-state battery of the present invention has an effect that the manufacturing process is simple because the electrolyte layer is directly coated on top of the electrode substrate, so that the bonding process of the electrode and the solid electrolyte layer and the electrode punching process for stacking the electrodes are not required, and has an effect of not only allowing more electrodes to be stacked in a desired size, but also facilitating alignment between electrodes.

### [Description of Drawings]

FIG. 1 is a diagram showing a preparation process of the first electrode substrate according to an embodiment of the present invention.
FIG. 2 is a diagram showing a preparation process of the second electrode substrate according to an embodiment of the present invention.
FIG. 3 is a diagram showing a manufacturing method of an electrode assembly according to an embodiment of the present invention.
FIG. 4 is a diagram showing an all-solid-state battery according to an embodiment of the present invention.

### [Best Mode]

Hereinafter, the present invention will be described in detail based on the accompanying drawings so that those skilled in the art can easily carry out the present invention. However, the present invention may be embodied in many different forms and is not limited to the embodiments described herein.

In order to clearly describe the present invention, parts irrelevant to the description are omitted, and the same reference numerals are assigned to the same or similar components throughout the specification.

In addition, the terms and words used in the present specification and claims should not be construed as limited to ordinary or dictionary meaning, and should be construed in a sense and concept consistent with the technical idea of the present invention, based on the principle that the inventor can properly define the concept of a term to describe his invention in the best way possible.

Hereinafter, embodiments will be described in detail with reference to the accompanying drawings. However, the present invention may be embodied in many different forms and is not limited to the embodiments described herein.

Among the conventional all-solid-state batteries, an all-solid-state battery using a sulfide-based solid electrolyte as a solid electrolyte, when manufactured by a roll-to-roll pressurization method, has a problem that interfacial contact is difficult because many pores are generated inside the electrodes. In order to solve this problem, although a three-dimensional pressurization method was performed through a hydrostatic pressurization method, the size of the battery that can be pressurized was limited depending on the chamber size of the isostatic pressurization equipment.

In addition, if lithium metal is used as the negative electrode, due to the low hardness of lithium metal, the applied pressure can be different when the negative electrode, positive electrode and all-solid-state electrolyte layer sheet are pressed together. Because of this, if lithium metal is used as the negative electrode, the negative electrode, positive electrode, and all-solid-state electrolyte layer sheet could not be pressed at once. In other words, the all-solid-state battery could be manufactured by repeating the complex process comprising stacking a negative electrode on an all-solid-state electrolyte layer sheet, and then pressurizing them, and stacking and pressurizing an all-solid-state electrolyte layer sheet thereon, and stacking and pressurizing a positive electrode thereon, and thus as the process is repeated, there was a problem that it is difficult to align the stacked electrodes.

Therefore, the inventors of the present invention
have found that the above problems can be solved when an all-solid-state battery is manufactured in such a way that positive electrodes and negative electrodes are alternately stacked by alternately folding two bending substrates including a plurality of electrodes spaced apart from each other in the width direction on the current collector, and have reached the completion of the present invention.

The present invention relates to a method for manufacturing an all-solid-state battery, which may specifically include:
(1) preparing a first electrode bending substrate comprising a plurality of first electrodes spaced apart from each other in the width direction on a current collector, wherein at one end of the current collector, a single-sided electrode applied with a first electrode active material is formed on only one side of the current collector, and the electrodes except for the single-sided electrode are double-sided electrodes in which an electrode active material having the same polarity is applied to both sides of the current collector; (2) preparing a second electrode bending substrate comprising a plurality of second electrodes spaced apart from each other in the width direction on a current collector, wherein at one end of the current collector, a single-sided electrode applied with a second electrode active material is formed on only one side of the current collector, and the electrodes except for the single-sided electrode are double-sided electrodes in which an electrode active material having the same polarity is applied to both sides of the current collector; (3) manufacturing an electrode laminate by overlapping the double-sided electrode at one end of the second electrode bending substrate on the single-sided electrode at one end of the first electrode bending substrate, and then alternately folding the first electrode bending substrate and the second electrode bending substrate so that the first electrode and the second electrode are alternately stacked; and (4) pressing the outermost side of the electrode laminate at a high temperature.

The present invention relates to an all-solid-state battery manufactured by the above manufacturing method, which comprises:
an electrode laminate in which first electrodes and second electrodes are alternately stacked by folding first electrode bending substrates comprising a plurality of first electrodes spaced apart from each other in the width direction on the current collector and second electrode bending substrates comprising a plurality of second electrodes spaced apart from each other in the width direction on the current collector alternately with each other,
wherein in the first electrode bending substrate, a single-sided electrode in which a first electrode active material is applied only to one side of the current collector is formed at one end of the current collector, and the electrodes other than the single-sided electrodes are double-sided electrodes in which an electrode active material having the same polarity is applied to both sides of a current collector,
wherein in the second electrode bending substrate, a single-sided electrode in which a second electrode active material is applied only to one side of the current collector is formed at one end of the current collector, and the electrodes other than the single-sided electrodes are double-sided electrodes in which an electrode active material having the same polarity is applied to both sides of a current collector,
wherein a solid electrolyte layer covering the entire electrode is formed on at least one of the first electrode bending substrate and the second electrode bending substrate, preventing the first electrode and the second electrode from contacting each other.

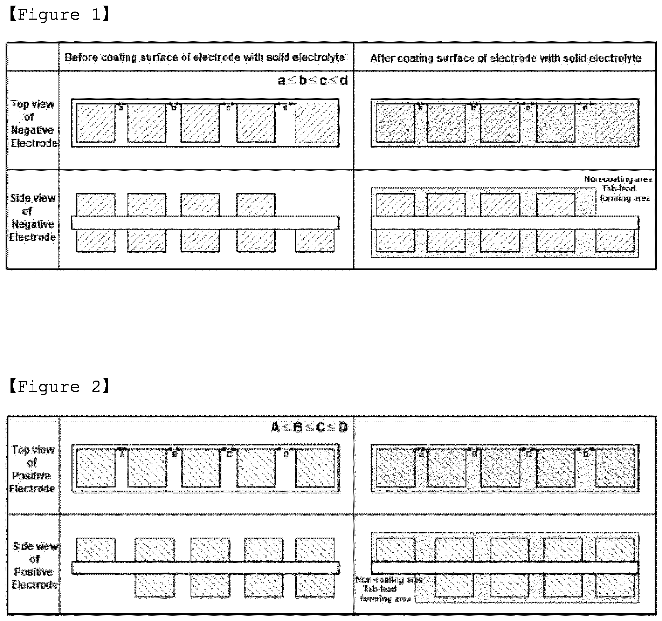

Step (1) above is a step of preparing the first electrode bending substrate. Hereinafter, the first electrode bending substrate will be described in detail with reference to FIG. 1. In FIG. 1, a negative electrode is described as a specific example. However, if the first electrode is a negative electrode, the second electrode described later may be a positive electrode, and if the first electrode is a positive electrode, the second electrode described later may be a negative electrode. The first electrode bending substrate includes a plurality of the first electrodes spaced apart from each other in a width direction on a current collector. The plurality of first electrodes may be single-sided electrodes in which a first electrode active material is applied on only one side of the current collector, or double-sided electrodes in which electrode active materials having the same polarity are applied on both sides of the current collector. In the case of the present invention, it is possible that the single-sided electrode in which the first electrode active material is applied only to one side of the current collector is formed on one end of the current collector, and the electrodes other than the single-sided electrodes are double-sided electrodes in which an electrode active material having the same polarity is applied to both sides of a current collector. Through this, in step (3) to be described later, one layer of positive electrode or negative electrode may be provided on the outermost layer of the electrode laminate manufactured by stacking the electrode bending substrates while overlapping each other.

In the first electrode bending substrate, the separation distance between the single-sided electrode and its adjacent double-sided electrode is the longest, and the separation distance between adjacent double-sided electrodes may be gradually shorter. As shown at the upper end of the left side of FIG. 1, the length of d, which is the distance between the rightmost single-sided negative electrode and the double-sided negative electrode, is the longest, and the length of c, which is the length between the double-sided negative electrodes on its left side, is long. In this way, the length of a, which is the length between the leftmost double-sided negative electrodes, can be the shortest. According to this difference in separation distances, in step (3) to be described later, as the first electrode bending substrate and the second electrode bending substrate are alternately folded, the difference due to the change in thickness or curvature of the electrode laminate is corrected, and accordingly, accurate lamination can be achieved. Alternatively, the separation distances adjacent to each other may be the same, and accordingly, the distance d and the distance c may be the same, the distance c and the distance b may be the same, and the distance b and the distance a may be the same. As a result, the relationship between the distances a, b, c, and d may satisfy the relationship of (a ≤ b ≤ c ≤ d). In this case, the distances a, b, c, and d may all be the same according to the equation, but at least the value of d may be greater than the value of a.

In addition, in the first electrode bending substrate, a solid electrolyte layer covering the entirety of the electrodes may be formed. As shown in FIG. 1, the solid electrolyte layer may cover the entirety of the double-sided electrode or single-sided electrode made of a negative electrode active material. As such, since the solid electrolyte layer covers the entirety of the electrodes, as the solid electrolyte layer is located between the first electrode and the second electrode in the bending process described later, it can serve to prevent the first electrode and the second electrode from contacting each other.

The solid electrolyte of the solid electrolyte layer may preferably comprise a sulfide-based solid electrolyte.

The sulfide-based solid electrolyte contains sulfur (S) and has ionic conductivity of a metal belonging to Group 1 or Group 2 of the periodic table, which may comprise Li-P-S-based glass or Li-P-S-based glass ceramics. Non-limiting examples of such a sulfide-based solid electrolyte may be Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂, or Li₂S-GeS₂-ZnS, and may comprise one or more of them. However, the present invention is not particularly limited thereto.

The method of forming the solid electrolyte layer is not particularly limited as long as it is used in the art. For example, it may be prepared by mixing solid electrolyte powder, a binder, and a solvent to prepare a slurry containing a sulfide-based solid electrolyte, then applying the slurry on a current collector on which an electrode is formed, and drying and rolling them. The binder and solvent may be used without particular limitation as long as they are materials that do not react with sulfur in the solid electrolyte.

Step (2) above is a step of preparing the second electrode bending substrate. Hereinafter, the second electrode bending substrate will be described in detail with reference to FIG. 2. In FIG. 2, a positive electrode is described as a specific example. However, if the second electrode is a positive electrode, the above-described first electrode may be a negative electrode, and if the second electrode is a negative electrode, the above-described first electrode may be a positive electrode. The second electrode bending substrate comprises a plurality of second electrodes spaced apart from each other in a width direction on a current collector. The plurality of second electrodes may be single-sided electrodes in which a second electrode active material is applied on only one side of the current collector, or double-sided electrodes in which electrode active materials having the same polarity are applied on both sides of the current collector. In the case of the present invention, it is possible that the single-sided electrode in which the second electrode active material is applied only to one side of the current collector is formed on one end of the current collector, and the electrodes other than the single-sided electrodes are double-sided electrodes in which an electrode active material having the same polarity is applied to both sides of a current collector. Through this, in step (3) to be described later, one layer of positive electrode or negative electrode may be provided on the outermost layer of the electrode laminate manufactured by stacking the electrode bending substrates while overlapping each other.

That is, the step of preparing the second electrode bending substrate can be prepared in the same way as the step of preparing the first electrode bending substrate, except that only the type of electrode is different.

In the case of the second electrode bending substrate, the separation distance between the single-sided electrode and the double-sided electrode adjacent to it is the shortest, and the separation distance between the adjacent double-sided electrodes may be gradually longer. As shown at the upper end of the left side of FIG. 2, the length of d, which is the distance between the rightmost double-sided positive electrode and the double-sided negative electrode, is the longest, and the length of c, which is the length between the double-sided positive electrodes on its left side, is long. In this way, the length of a, which is the length between the leftmost single-sided positive electrode and the double-sided positive electrode, can be the shortest. According to this difference in separation distances, in step (3) to be described later, as the first electrode bending substrate and the second electrode bending substrate are alternately folded, the difference due to the change in thickness or curvature of the electrode laminate is corrected, and accordingly, accurate lamination can be achieved. Alternatively, even in the second electrode bending substrate, the separation distances adjacent to each other may be the same, and accordingly, the distance D and the distance C may be the same, the distance C and the distance B may be the same, and the distance D and the distance A may be the same. As a result, the relationship between the distances A, B, C, and D may satisfy the relationship of (A ≤ B ≤ C ≤ D). In this case, the distances A, B, C, and D may all be the same according to the equation, but at least the value of D may be greater than the value of A. In addition, the separation distance between the electrodes of the second electrode bending substrate may be adjusted according to the separation distance between the electrodes of the first electrode bending substrate.

Also, even in the second electrode bending substrate, a solid electrolyte layer covering the entirety of the electrodes may be formed. As shown in FIG. 2, the solid electrolyte layer may cover the entirety of the double-sided electrode or single-sided electrode made of a positive electrode active material.

As such, the role, material, and formation method of the solid electrolyte layer in the second electrode bending substrate are the same as those of the first electrode bending substrate.

In the all-solid-state battery manufacturing method of the present invention, the solid electrolyte layer covering the entirety of the electrodes may be formed only on at least one of the first electrode bending substrate and the second electrode bending substrate. That is, although solid electrolyte layers may be formed on both the first electrode bending substrate and the second electrode bending substrate, even if a solid electrolyte layer is formed on at least one of them, it is possible to prevent the first electrode and the second electrode from contacting each other.

Next, in step (3), an electrode laminate is manufactured. Specifically, the electrode laminate is manufactured by overlapping the double-sided electrode of one end of the second electrode bending substrate on the single-sided electrode of one end of the first electrode bending substrate, and then alternately folding the first electrode bending substrate and the second electrode bending substrate, thereby alternately stacking the first electrode and the second electrode.

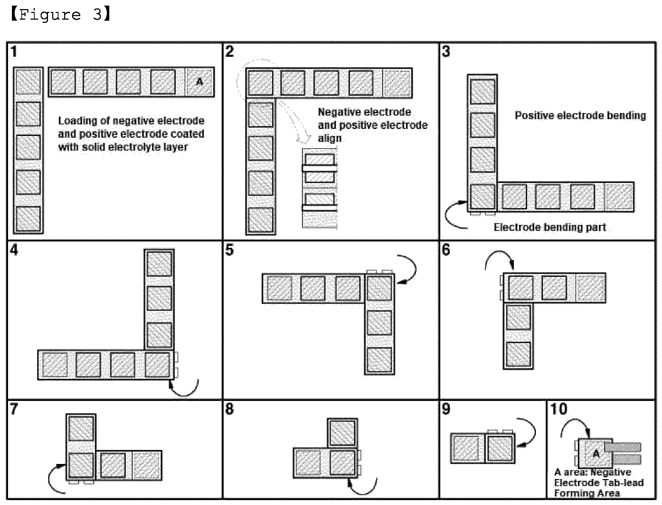

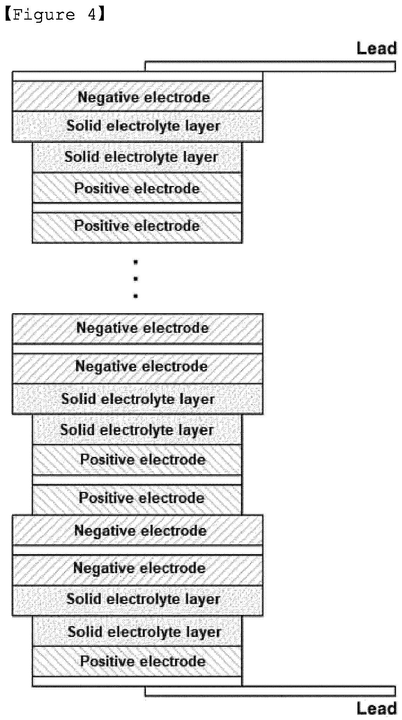

Specifically, the manufacturing method of the electrode laminate in step (3) will be described with reference to FIG. 3. FIG. 3 assumes the case where a solid electrolyte layer is formed on both the first electrode bending substrate and the second electrode bending substrate, and it does not matter if a solid electrolyte layer is formed on either one of them, as described above. First, referring to step 1 of FIG. 3, the first bending substrate having a negative electrode formed on the current collector is prepared in a horizontal direction, and the first bending substrate having a positive electrode formed on the current collector is prepared in a vertical direction. Then, in step 2, the negative electrodes on both sides of the first bending substrate are placed on the single-sided positive electrode of the second bending substrate. In step 3, the second bending substrate at the bottom is folded so that the second bending substrate is located above the first bending substrate. Then, in step 4, the first bending substrate in the transverse direction is folded so as to be located above the second bending substrate. When steps 5 to 9 are repeated in this way, as shown in FIG. 4, a single-sided positive electrode is formed at the bottom, a single-sided negative electrode is formed at the top, a double-sided negative electrode and a double-sided positive electrode are alternately stacked in the middle, and a solid electrolyte layer is formed between the positive electrode and the negative electrode, thereby making it possible to manufacture an electrode laminate with a structure that prevents contact between the positive electrode and the negative electrode.

As shown in FIG. 4, the uppermost and lowermost electrodes of the electrode laminate manufactured by the manufacturing method of step (3) may be single-sided electrodes in which the electrode active material is applied only to one side of the current collector.

In this case, the uppermost and lowermost single-sided electrodes may have different polarities. That is, if the single-sided electrode at the bottom is a positive electrode, the single-sided electrode at the top can be a negative electrode, and if the single-sided electrode at the bottom is a negative electrode, the single-sided electrode at the top can be a positive electrode.

In addition, the electrodes other than the single-sided electrodes may be double-sided electrodes in which an electrode active material having the same polarity is applied to both sides of a current collector.

Thereafter, a step of bonding lead tabs to both outermost sides of the electrode laminate may be further comprised. Specifically, as in step 10 of FIG. 3, electrode lead tabs are formed at the uppermost and lowermost parts of the electrode laminate. For example, a negative electrode lead tab may be formed in current collector part of the uppermost part, and a positive electrode lead tab may be formed in the current collector part in the lowermost part of the electrode laminate, and the electrode laminate thus manufactured has a structure as shown in FIG. 4.

In addition, in step (4), the outermost side of the electrode laminate is pressurized at a high temperature. At this time, the pressurization at a high-temperature is performed using CIP, WIP, or upper and lower plates, through which the interface between the solid electrolyte layers can be closely adhered to ensure ionic conductivity. The pressurization conditions are not particularly limited, and pressurization conditions used in manufacturing an all-solid-state battery may be used. Preferably, pressurization is performed at 60 to 100 °C at a pressure of 300 to 500 MPa for 10 to 60 minutes to prepare a solid electrolyte layer having a thickness of 20 to 100 µm after pressure. For example, the solid electrolyte layer after pressure may be prepared to have a thickness of 50 µm by pressing at 80°C for 30 minutes at a pressure of 500 MPa.

According to the present invention, an all-solid-state battery manufactured by the above manufacturing method is provided.

Specifically, the present invention provides an all-solid-state battery comprising an electrode laminate in which first electrodes and second electrodes are alternately stacked by folding first electrode bending substrates comprising a plurality of first electrodes spaced apart from each other in the width direction on the current collector and second electrode bending substrates comprising a plurality of second electrodes spaced apart from each other in the width direction on the current collector alternately with each other,
wherein in the first electrode bending substrate, a single-sided electrode in which a first electrode active material is applied only to one side of the current collector is formed at one end of the current collector, and the electrodes other than the single-sided electrodes are double-sided electrodes in which an electrode active material having the same polarity is applied to both sides of a current collector,
wherein in the second electrode bending substrate, a single-sided electrode in which a second electrode active material is applied only to one side of the current collector is formed at one end of the current collector, and the electrodes other than the single-sided electrodes are double-sided electrodes in which an electrode active material having the same polarity is applied to both sides of a current collector, and
wherein a solid electrolyte layer covering the entire electrode is formed on at least one of the first electrode bending substrate and the second electrode bending substrate, preventing the first electrode and the second electrode from contacting each other.

Description of each component of the all-solid-state battery is the same as each component described in the manufacturing method of the all-solid-state battery described above.

An all-solid-state battery according to an embodiment of the present invention is a lithium secondary battery, and there is no limitation on a positive electrode or a negative electrode, and the lithium secondary battery may be a lithium-air battery, a lithium oxide battery, a lithium-sulfur battery, or a lithium metal battery.

When the electrode of the first electrode bending substrate or the second electrode bending substrate according to an embodiment of the present invention is a positive electrode, the positive electrode current collector included in the bending substrate is for supporting the positive electrode active material, and is not particularly limited as long as it has excellent conductivity and is electrochemically stable in the voltage range of a lithium secondary battery. For example, the positive electrode current collector may be any one metal selected from the group consisting of copper, aluminum, stainless steel, titanium, silver, palladium, nickel, alloys thereof, and combinations thereof, and the stainless steel may be surface-treated with carbon, nickel, titanium, or silver, and the alloy may preferably be an aluminum-cadmium alloy. In addition, sintered carbon, a nonconductive polymer surface-treated with an electrically conductive material, or a conductive polymer may be used.

The positive electrode current collector can have minute irregularities formed on its surface to enhance the bonding force with the positive electrode active material, and may be formed in various forms such as film, sheet, foil, mesh, net, porous body, foam, nonwoven fabric or the like.

The positive electrode active material may comprise a positive electrode active material and optionally an electrically conductive material and a binder.

The positive electrode active material may vary depending on the type of the all-solid-state battery. For example, the positive electrode active material may be, but is not limited to, layered compounds such as lithium cobalt oxide (LiCoO₂) and lithium nickel oxide (LiNiO₂) or compounds substituted with one or more transition metals; lithium manganese oxides such as formula Li₁₊ₓMn₂₋ₓO₄(0≤x≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; Ni site type lithium nickel oxide represented by formula LiNi₁₋ₓMₓO₂(M = Co, Mn, Al, Cu, Fe, Mg, B or Ga; 0.01≤x≤0.3); lithium manganese composite oxides represented by formula LiMn₂₋ₓMₓO₂(M = Co, Ni, Fe, Cr, Zn or Ta; 0.01≤x≤0.1) or Li₂Mn₃MO₈ (M = Fe, Co, Ni, Cu or Zn); lithium-manganese composite oxides of spinel structure represented by LiNiₓMn₂₋ₓO₄; LiCoPO₄; LiFePO₄; elemental sulfur (S₈); and a sulfur-based compound such as Li₂Sₙ(n=1), an organosulfur compound or a carbon-sulfur polymer ((C₂Sₓ)ₙ: x=2.5 ~ 50, n=2).

The electrically conductive material is a material that acts as a path through which electrons move from the current collector to the positive electrode active material by electrically connecting the electrolyte and the positive electrode active material, and is not particularly limited as long as it has porosity and conductivity without causing chemical changes in the lithium secondary battery.

For example, carbon-based materials having porosity may be used as an electrically conductive material. Such carbon-based materials may comprise carbon black, graphite, graphene, activated carbon, carbon fiber and the like, and metallic fibers such as metal mesh; metallic powder such as copper, silver, nickel, and aluminum; or organic electrically-conductive materials such as polyphenylene derivatives may be used. The electrically conductive materials may be used alone or in combination.

Products that are currently marketed as electrically conductive materials may comprise acetylene black series (products by Chevron Chemical Company or Gulf Oil Company), Ketjen Black EC series (products by Armak Company), Vulcan XC-72(a product by Cabot Company) and Super P (a product by MMM). For example, acetylene black, carbon black, graphite, etc. may be used.

In addition, the positive electrode may further comprise a binder. The binder enhances adhesion force between the components constituting the positive electrode and between them and the current collector, and any binder known in the art can be used.

For example, the binder may be fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxypropylcellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

When the electrode of the first electrode bending substrate or the second electrode bending substrate according to an embodiment of the present invention is a negative electrode, the negative electrode included in the bending substrate may include an electrically conductive material and a binder, if necessary, as in the case of the positive electrode. In this case, as the negative electrode current collector, electrically conductive material, and binder, those normally used for the negative electrode may be used, as described above.

The negative electrode active material according to an embodiment of the present invention may be a lithium metal, a lithium alloy, or a negative electrode free form.

The negative electrode free form may comprise only the negative electrode current collector, or may have a structure coated with a carbon layer containing a binder on the negative electrode current collector.

In the method for manufacturing an all-solid-state battery according to an embodiment of the present invention, since each of the electrodes is manufactured by repeating the folding and stacking process so that they are stacked in a state in which they are not in contact with each other, there is an advantage in that the manufacturing process is simple. Also, in the prior art, pressurization was performed in each process of stacking the positive electrode, the negative electrode, and the all-solid-state solid electrolyte layer sheet, whereas there is also an advantage that the manufacturing process is simple in that the manufactured all-solid-state battery can be pressurized at once. In addition, there is an effect that more layers of electrodes can be stacked in various sizes, and since the positive and negative electrodes are placed at designated locations on the all-solid-state solid electrolyte layer sheet, it is easy to align the positive and negative electrodes.

Those skilled in the art related to the present embodiment will be able to understand that it may be implemented in a modified form within a range that does not deviate from the essential characteristics of the above description. Therefore, the disclosed methods are to be considered in an illustrative rather than a limiting sense. The scope of the present invention is shown in the claims rather than the foregoing description, and all differences within the equivalent range should be construed as being comprised in the present invention.

## Claims

1. A method of manufacturing an all-solid-state battery, comprising:
(1) preparing a first electrode bending substrate comprising a plurality of first electrodes spaced apart from each other in the width direction on a current collector, wherein at one end of the current collector, a single-sided electrode applied with a first electrode active material is formed on only one side of the current collector, and the electrodes except for the single-sided electrode are double-sided electrodes in which an electrode active material having the same polarity is applied to both sides of the current collector;
(2) preparing a second electrode bending substrate comprising a plurality of second electrodes spaced apart from each other in the width direction on a current collector, wherein at one end of the current collector, a single-sided electrode applied a second electrode active material is formed on only one side of the current collector, and the electrodes except for the single-sided electrode are double-sided electrodes in which an electrode active material having the same polarity is applied to both sides of the current collector;
(3) manufacturing an electrode laminate by overlapping the double-sided electrode at one end of the second electrode bending substrate on the single-sided electrode at one end of the first electrode bending substrate, and then alternately folding the first electrode bending substrate and the second electrode bending substrate so that the first electrode and the second electrode are alternately stacked; and
(4) pressing the outermost side of the electrode laminate at a high temperature,
wherein a solid electrolyte layer covering the entire electrode is formed on at least one of the first electrode bending substrate and the second electrode bending substrate, preventing the first electrode and the second electrode from contacting each other.

2. The method of manufacturing an all-solid-state battery according to claim 1,
wherein in the first electrode bending substrate, the separation distance between the single-sided electrode and the double-sided electrode adjacent to it is the longest, and the separation distance between the adjacent double-sided electrodes is gradually shorter, but the separation distances adjacent to each other may be the same, and
wherein in the second electrode bending substrate, the separation distance between the single-sided electrode and the double-sided electrode adjacent to it is the shortest, and the separation distance between the adjacent double-sided electrodes is gradually longer, but the separation distances adjacent to each other may be the same.

3. The method of manufacturing an all-solid-state battery according to claim 1, further comprising bonding lead tabs to both outermost sides of the electrode laminate.

4. The method of manufacturing an all-solid-state battery according to claim 1, wherein step (4) comprises pressurizing for 10 to 60 minutes at a pressure of 300 to 500 MPa at 60 to 100 °C.

5. The method of manufacturing an all-solid-state battery according to claim 1, wherein if the first electrode is a negative electrode, the second electrode is a positive electrode, and if the first electrode is a positive electrode, the second electrode is a negative electrode.

6. The method of manufacturing an all-solid-state battery according to claim 1, wherein the uppermost and lowermost electrodes of the electrode laminate may be single-sided electrodes in which an electrode active material is applied only to one side of the current collector.

7. The method of manufacturing an all-solid-state battery according to claim 6, wherein the single-sided electrodes of the uppermost and lowermost parts have different polarities.

8. The method of manufacturing an all-solid-state battery according to claim 6, wherein the electrodes other than the single-sided electrodes are double-sided electrodes in which an electrode active material having the same polarity is applied to both sides of a current collector.

9. The method of manufacturing an all-solid-state battery according to claim 1, wherein the solid electrolyte layer comprises a sulfide-based solid electrolyte.

10. The method of manufacturing an all-solid-state battery according to claim 1, wherein a solid electrolyte layer comprises.

11. The method of manufacturing an all-solid-state battery according to claim 1, wherein if the first electrode or the second electrode is a negative electrode, the negative electrode active material is lithium metal or a lithium alloy.

12. An all-solid-state battery, comprising an electrode laminate in which first electrodes and second electrodes are alternately stacked by folding first electrode bending substrates comprising a plurality of first electrodes spaced apart from each other in the width direction on the current collector and second electrode bending substrates comprising a plurality of second electrodes spaced apart from each other in the width direction on the current collector alternately with each other,
wherein in the first electrode bending substrate, a single-sided electrode in which a first electrode active material is applied only to one side of the current collector is formed at one end of the current collector, and the electrodes other than the single-sided electrodes are double-sided electrodes in which an electrode active material having the same polarity is applied to both sides of a current collector,
wherein in the second electrode bending substrate, a single-sided electrode in which a second electrode active material is applied only to one side of the current collector is formed at one end of the current collector, and the electrodes other than the single-sided electrodes are double-sided electrodes in which an electrode active material having the same polarity is applied to both sides of a current collector, and
wherein a solid electrolyte layer covering the entire electrode is formed on at least one of the first electrode bending substrate and the second electrode bending substrate, preventing the first electrode and the second electrode from contacting each other.
